# EUROPÄISCHE PATENTANMELDUNG

(11) **EP 1 808 808 A1**
(43) Veröffentlichungstag der Anmeldung: **18.07.2007**
(21) Anmeldenummer: 06450175.2
(22) Anmeldetag: 05.12.2006
(51) Int. Cl.: G06Q 30/00

(54) **Anlage zum Analysieren von Kundenströmen in einem abgeschlossenen Verkaufsbereich**

(30) Priorität: 06.12.2005 AT 19522005
(71) Anmelder: Höfler, Kurt, A-4020 Linz (AT); Kritzinger, Michaela Maga, 4020 Linz (AT); Leitner, Jürgen, 4320 Perg (AT)
(72) Erfinder: Höfler, Kurt, A-4020 Linz (AT); Kritzinger, Michaela Maga, 4020 Linz (AT); Leitner, Jürgen, 4320 Perg (AT)
(74) Vertreter: Hübscher, Helmut

(57) **Zusammenfassung**

Es wird eine Anlage zum Analysieren von Kundenströmen in einem abgeschlossenen Verkaufsbereich (1) mit diesem Verkaufsbereich (1) zugehörigen, an eine Speichereinheit (8) für die Daten der verkauften Waren angeschlossenen Kassen (9), mit über den Kaufbereich (1) verteilten Sensoren (5) zur zeitlichen Erfassung der Kundenströme und mit einem an die Sensoren angeschlossenen Rechner (7) zur programmbedingten Analyse der Kundenströme in Abhängigkeit von das statistische Kaufverhalten der Kunden beeinflussenden Parametern beschrieben. Um vorteilhafte Analysebedingungen zu schaffen, wird vorgeschlagen, daß der Rechner (7) mit einer Einrichtung (10) zur Vorgabe der örtlichen Anordnung von Waren im Verkaufsbereich (1) und mit der Speichereinheit (2) für die Daten der Kassen (9) verbunden ist und mit Hilfe eines Auswerteprogramms den warenspezifischen Umsatz in Abhängigkeit von den Kundenströmen und/oder von der örtlichen Warenanordnung ermittelt.

## Beschreibung

Die Erfindung bezieht sich auf eine Anlage zum Analysieren von Kundenströmen in einem abgeschlossenen Verkaufsbereich mit diesem Verkaufsbereich zugehörigen, an eine Speichereinheit für die Daten der verkauften Waren angeschlossenen Kassen, mit über den Kaufbereich verteilten Sensoren zur zeitlichen Erfassung der Kundenströme und mit einem an die Sensoren angeschlossenen Rechner zur programmbedingten Analyse der Kundenströme in Abhängigkeit von das statistische Kaufverhalten der Kunden beeinflussenden Parametern.

Um die Genauigkeit des Kaufverhaltens von Kunden in Abhängigkeit von einer laufenden Werbung durch die Ermittlung der tatsächlich verkauften Waren an Hand der Registrierung der elektronischen Kassen am Ausgang des Werbe- bzw. Kaufbereichs zu verbessern, ist es bekannt (DE 199 62 201 A1), die Kundenströme innerhalb eines Werbebereichs mit Hilfe von über den Werbebereich verteilten Sensoren zeitlich zu erfassen, so daß aufgrund dieser Kundenstromerfassung das Antwortverhalten der Kunden auf die jeweilige Werbung und damit deren Werbewirksamkeit analysiert werden kann.

Darüber hinaus ist es bekannt (DE 102 52 904 A1), den einzelnen Warengruppen Kennungen zuzuordnen, die nicht nur am Lagerort der Waren, sondern auch auf einer zentralen Anzeige aufscheinen, und zwar mit dem Ziel, den Kundenstrom zu bestimmten örtlichen Abschnitten eines Verkaufsbereichs zu lenken, in denen neben Waren mit reduzierten Preisen auch Waren ohne Preisnachlaß in der Hoffnung angeboten werden, daß aufgrund der Nachbarschaft zu den verbilligten Waren die Waren ohne Preisnachlaß ebenfalls verstärkt gekauft werden. Eine Überprüfung der Wirksamkeit dieser Maßnahme und eine davon abhängige Vorausschau des Kaufverhaltens zu seiner gezielten Beeinflussung ist allerdings nicht möglich.

Der Erfindung liegt somit die Aufgabe zugrunde, eine Anlage zum Analysieren von Kundenströmen in einem abgeschlossenen Verkaufsbereich der eingangs geschilderten Art so auszugestalten, daß die Wirksamkeit von das Kaufverhalten der Kunden beeinflussenden, sich auf die Warenanordnung beziehenden Parametern überprüft und eine statistische Vorhersage des Kaufverhaltens bei sich ändernden Parametern getroffen werden kann.

Die Erfindung löst die gestellte Aufgabe dadurch, daß der Rechner mit einer Einrichtung zur Vorgabe der örtlichen Anordnung von Waren im Verkaufsbereich und mit der Speichereinheit für die Daten der Kassen verbunden ist und mit Hilfe eines Auswerteprogramms den warenspezifischen Umsatz in Abhängigkeit von den Kundenströmen und/oder von der örtlichen Warenanordnung ermittelt.

Durch die Verknüpfung der erfaßten Kundenströme mit den warenspezifischen Umsätzen kann in einfacher Weise über ein entsprechendes Auswerteprogramm die Wirksamkeit einer beispielsweise hinsichtlich der Warenverteilung über den Verkaufsbereich getroffenen Maßnahme überprüft werden, um nach einem entsprechenden Lernvorgang die diesbezüglichen Parameter gezielt zur Beeinflussung des Kaufverhaltens der Kunden wählen zu können. Die an sich bekannte zeitliche Erfassung der Kundenströme läßt sich nämlich in eine Beziehung zum Kaufverhalten setzen, das mit Hilfe der abgespeicherten Daten für die einzelnen Waren aus den Speichereinheiten der Kassen bezüglich der Umsatzentwicklung ermittelt werden kann. So kann beispielsweise die gewählte örtliche Anordnung und Verteilung der Waren innerhalb des Verkaufsbereichs hinsichtlich des Kaufverhaltens bei gegebenen Kundenströmen überprüft werden oder Maßnahmen zur Lenkung der Kundenströme gesetzt werden, um ein bestimmtes Kaufverhalten zu erreichen.

Da das Kaufverhalten und die Kundenströme unter anderem auch von der Einkaufszeit, den Einkaufstagen und den Jahreszeiten abhängen, kann zur Berücksichtigung dieser Umstände der Rechner die Abhängigkeit des warenspezifischen Umsatzes von den Kundenströmen und/oder der örtlichen Warenanordnung für vorgebbare Zeitabschnitte ermitteln. Es ist aber nicht nur die Ermittlung zeitlicher Abhängigkeiten möglich, sondern auch anderer Abhängigkeiten, die sich über die Sensoren erfassen lassen. So können die Sensoren oder eine mit den Sensoren verbundene Auswerteschaltung die Kundenströme in Abhängigkeit von vorgebbaren Parametern, beispielsweise in Abhängigkeit von der Körpergröße, aufnehmen, was Rückschlüsse auf das im Vergleich zu Erwachsenen unterschiedliche Kaufverhalten von Kindern und Jugendlichen erlaubt.

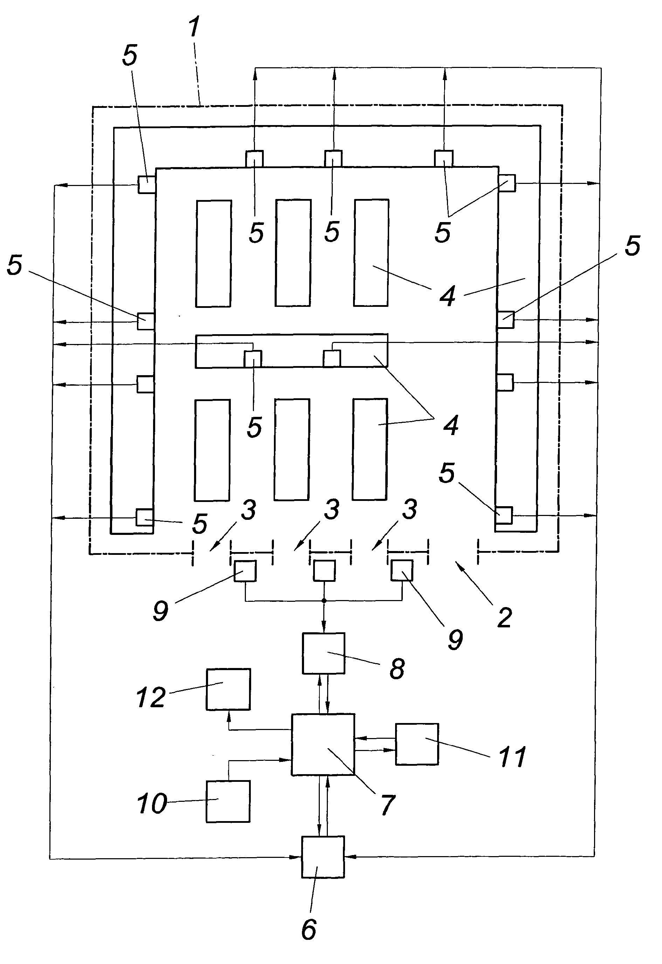

In der Zeichnung ist der Erfindungsgegenstand beispielsweise dargestellt, und zwar wird eine erfindungsgemäße Anlage zum Analysieren von Kundenströmen in einem schematischen Blockschaltbild gezeigt.

Die dargestellte Anlage umfaßt in einem abgeschlossenen Verkaufsbereich 1, der durch einen Eingang 2 betreten und durch mehrere Ausgänge 3 verlassen werden kann, verschiedene Verkaufsregale 4 zur sortierten Aufnahme von Waren. Zur Erfassung von Kundenströmen innerhalb des Verkaufsbereichs 1 sind Sensoren 5 vorgesehen, die unterschiedlich aufgebaut sein und beispielsweise aus Bilderfassungseinrichtungen bestehen können. Solche Sensoren können aber auch auf Wärmestrahlungen, Schallwellen oder elektromagnetische Strahlungen unterschiedlicher Frequenzen oder auf andere Signale ansprechen, weil es nicht auf die Art der Sensoren ankommt, sondern lediglich darauf, daß für ein bestimmtes Verhalten der Kundenströme kennzeichnende Daten erfaßt werden können. Die Sensoren 5 zur Erfassung der Kundenströme vom Eingang 2 bis zu den Ausgängen 3 sind an eine Auswerteschaltung 6 angeschlossen, in der die durch die Sensoren 5 erfaßten Daten verarbeitet und von einem Rechner 7 abgefragt werden können. Der Rechner 7 ist außerdem mit einer Speichereinheit 8 für die Daten der verkauften Waren verbunden. Diese Daten werden von den den Ausgängen 3 zugeordneten Kassen 9 erhalten. Über eine Einrichtung 10 zur Vorgabe der örtlichen Anordnung von Waren im Verkaufsbereich können dem Rechner 7 die Lagekoordinaten der einzelnen Waren bzw. Warengruppen in den Verkaufsregalen 4 zur Verfügung gestellt werden, um mit Hilfe eines aus einem Programmspeicher 11 ausgelesenen Auswerteprogramms einen Zusammenhang zwischen den Kundenströmen, der örtlichen Warenanordnung in den Verkaufsregalen 4 und dem warenspezifischen Umsatz darzustellen. Die programmbedingt ermittelte, gegenseitige Zuordnung dieser erfaßten Größen kann in eine Anzeigeeinrichtung 12 ausgelesen werden.

Je nach dem eingesetzten Auswerteprogramm können somit die anhand der erfaßten Daten dargestellten Zusammenhänge vorteilhaft für eine zielgerichtete Warenanordnung in den Verkaufsregalen 4 genützt werden, wobei die mit der zeitlichen Erfassung der Kundenströme verbundene Aufzeichnung der örtlichen Verweildauer vorteilhaft zur Analyse des Kundenverhaltens berücksichtigt werden kann. Es ist aber auch möglich, aufgrund der erfaßten Zusammenhänge die Kundenströme in einer bestimmten Richtung zu lenken, um ein angestrebtes Kaufverhalten zu unterstützen. Die Erfassung der Kundenströme stellt darüber hinaus eine vorteilhafte Voraussetzung zur Überprüfung von Sicherheitsmaßnahmen, von Maßnahmen zur Diebstahlüberwachung oder von Maßnahmen dar, beispielsweise Engpässe im Bereich der mit den Kassen 9 versehenen Ausgänge 3 zu vermeiden, weil zur Analyse des statistischen Verhaltens von Kunden bezüglich dieser Maßnahmen auf einen über die Aufzeichnung der Kundenströme belegbaren Datenbestand zurückgegriffen werden kann, so daß aufgrund eines einmal erfaßten Kundenstromverhaltens in einer Ausnahmesituation vorkehrende Maßnahmen getroffen werden können, die beispielsweise ein Panikverhalten berücksichtigen.

## Patentansprüche

1. Anlage zum Analysieren von Kundenströmen in einem abgeschlossenen Verkaufsbereich (1) mit diesem Verkaufsbereich (1) zugehörigen, an eine Speichereinheit (8) für die Daten der verkauften Waren angeschlossenen Kassen (9), mit über den Kaufbereich (1) verteilten Sensoren (5) zur zeitlichen Erfassung der Kundenströme und mit einem an die Sensoren angeschlossenen Rechner (7) zur programmbedingten Analyse der Kundenströme in Abhängigkeit von das statistische Kaufverhalten der Kunden beeinflussenden Parametern, **dadurch gekennzeichnet, daß** der Rechner (7) mit einer Einrichtung (10) zur Vorgabe der örtlichen Anordnung von Waren im Verkaufsbereich (1) und mit der Speichereinheit (2) für die Daten der Kassen (9) verbunden ist und mit Hilfe eines Auswerteprogramms den warenspezifischen Umsatz in Abhängigkeit von den Kundenströmen und/oder von der örtlichen Warenanordnung ermittelt.

2. Anlage nach Anspruch 1, **dadurch gekennzeichnet, daß** der Rechner (7) die Abhängigkeit des warenspezifischen Umsatzes von den Kundenströmen und/oder der örtlichen Warenanordnung für vorgebbare Zeitabschnitte ermittelt.

3. Anlage nach Anspruch 1 oder 2, **dadurch gekennzeichnet, daß** die Sensoren (5) oder eine mit den Sensoren (5) verbundene Auswerteschaltung (6) die Kundenströme in Abhängigkeit von vorgebbaren Parametern, beispielsweise in Abhängigkeit von der Körpergröße, erfassen.
